# EUROPEAN PATENT APPLICATION

(11) **EP 4 755 671 A1**
(43) Date of publication of application: **10.06.2026**
(21) Application number: 24847523.8
(22) Date of filing: 31.01.2024
(51) Int. Cl.: B60H 1/00

(54) **VEHICLE THERMAL MANAGEMENT SYSTEM AND VEHICLE**

(30) Priority: 31.07.2023 CN 202310957868
(71) Applicant: BYD Company Limited, Shenzhen, Guangdong 518118 (CN)
(72) Inventor: WANG, Kuncheng, Shenzhen, Guangdong 518118 (CN); GU, Jiang, Shenzhen, Guangdong 518118 (CN); ZHOU, Kai, Shenzhen, Guangdong 518118 (CN); WEN, Xiaoquan, Shenzhen, Guangdong 518118 (CN)
(74) Representative: Mathys & Squire
(86) International application number: PCT/CN2024/074959
(87) International publication number: WO 2025/025554

(57) **Abstract**

A vehicle thermal management system. The vehicle thermal management system comprises an engine system heat exchange loop, an electric drive system heat exchange loop, an air conditioner heat pump heat exchange loop, and a first heat exchanger; the first heat exchanger comprises a first chamber, a second chamber, and a third chamber; the first chamber is communicated with the engine system heat exchange loop; the second chamber is communicated with the electric drive system heat exchange loop; the third chamber is communicated with the air conditioner heat pump heat exchange loop; and the second chamber is located between the first chamber and the third chamber.

## Description

### CROSS-REFERENCE TO RELATED APPLICATIONS

The present disclosure claims priority to Chinese Patent Application No. CN202310957868.X filed on July 31, 2023, entitled "VEHICLE THERMAL MANAGEMENT SYSTEM AND VEHICLE", which is incorporated herein by reference in its entirety.

### FIELD

The present disclosure relates to the field of thermal management technology, and in particular, to a vehicle thermal management system and a vehicle.

### BACKGROUND

Exhaust gas discharged by existing engines has a relatively high temperature, which is not conducive to recycling, resulting in low thermal management efficiency.

### SUMMARY

A series of simplified concepts are introduced in the summary of the invention section, which will be further elaborated in the detailed description section. The summary of the invention section of the present disclosure is not intended to limit the key features and essential technical features of the claimed technical solution, nor is it intended to determine the protection scope of the claimed technical solution.

According to a first aspect of the present disclosure, a vehicle thermal management system is provided, the vehicle thermal management system includes:
An engine system heat exchange circuit;
An electric drive system heat exchange circuit;
An air conditioning heat pump heat exchange circuit; and
A first heat exchanger, the first heat exchanger includes:
   A first chamber, the first chamber being in communication with the engine system heat exchange circuit,
   A second chamber, the second chamber being in communication with the electric drive system heat exchange circuit, and
   A third chamber, the third chamber being in communication with the air conditioning heat pump heat exchange circuit,
   The second chamber is located between the first chamber and the third chamber.

In an embodiment, the vehicle thermal management system is configured such that the flow directions of the cooling fluid in adjacent chambers among the first chamber, the second chamber, and the third chamber are opposite.

In an embodiment, inlets and outlets are alternately arranged in sequence on the same side of the first chamber, the second chamber, and the third chamber, such that the flow directions of the cooling fluid in adjacent chambers are opposite.

In an embodiment, the inlet of the first chamber, the outlet of the second chamber, and the inlet of the third chamber are located on the same side; and the outlet of the first chamber, the inlet of the second chamber, and the outlet of the third chamber are located on the same side.

In an embodiment, when the vehicle thermal management system is in an operating state, the temperature ranges of adjacent chambers among the first chamber, the second chamber, and the third chamber are different, and the temperature ranges of the first chamber, the second chamber, and the third chamber are in a stepwise relationship in sequence.

In an embodiment, a first temperature corresponds to the first chamber, a second temperature corresponds to the second chamber, and a third temperature corresponds to the third chamber; and the temperature range corresponding to the first temperature is 80 to 100°C, the temperature range corresponding to the second temperature is 40 to 65°C, and the temperature range corresponding to the third temperature is 10 to 35°C.

In an embodiment, the engine system heat exchange circuit includes an engine cooling heat exchange circuit and an engine intake and exhaust heat exchange circuit;
The vehicle thermal management system further includes a second heat exchanger, and the second heat exchanger includes:
A fourth chamber, the fourth chamber being in communication with the engine intake and exhaust heat exchange circuit, and
A fifth chamber, the fourth chamber being in communication with the engine cooling heat exchange circuit;
The first chamber being further in communication with the engine intake and exhaust heat exchange circuit, and the vehicle thermal management system being configured such that the cooling fluid in the engine intake and exhaust heat exchange circuit first flows through the fourth chamber and then through the first chamber to achieve early cooling and condensation via the first heat exchanger and the second heat exchanger.

In an embodiment, the vehicle thermal management system further includes an exhaust port, and the first heat exchanger, the second heat exchanger, and the exhaust port are arranged obliquely in sequence, such that condensed water formed by early cooling and condensation is discharged through the exhaust port
In an embodiment, the vehicle thermal management system further includes a water-cooled intercooler, and the water-cooled intercooler includes:
A sixth chamber, the sixth chamber being in communication with the engine system heat exchange circuit and the first chamber, and
A seventh chamber, the seventh chamber being in communication with the electric drive system heat exchange circuit,
The vehicle thermal management system being configured such that the cooling fluid in the engine system heat exchange circuit first flows through the first chamber and then through the sixth chamber to reduce temperature via the first heat exchanger and the water-cooled intercooler.

In an embodiment, the vehicle thermal management system is configured such that the flow directions of the cooling fluid in the sixth chamber and the seventh chamber are opposite.

In an embodiment, the inlet of the sixth chamber is located on a first side of the water-cooled intercooler, and the inlet of the seventh chamber is located on a second side of the water-cooled intercooler;
The outlet of the sixth chamber is located on the second side of the water-cooled intercooler, and the outlet of the seventh chamber is located on the first side of the water-cooled intercooler.

In an embodiment, the electric drive system heat exchange circuit and the air conditioning heat pump heat exchange circuit perform heat exchange through the second chamber and the third chamber, and the air conditioning heat pump heat exchange circuit is configured to use the heat from the heat exchange to provide heat for the passenger compartment.

In an embodiment, the air conditioning heat pump heat exchange circuit is configured to use the heat from the heat exchange to provide heat for the battery.

In an embodiment, the vehicle thermal management system further includes a third heat exchanger, the third heat exchanger being in communication with the air conditioning heat pump heat exchange circuit, and the third heat exchanger being configured to exchange heat with the outside.

In an embodiment, when the vehicle thermal management system is in a first operating state, the electric drive system heat exchange circuit and the air conditioning heat pump heat exchange circuit are configured to perform heat exchange through the first heat exchanger.

In an embodiment, when the vehicle thermal management system is in a second operating state, the engine system heat exchange circuit and the electric drive system heat exchange circuit are configured to perform heat exchange via the first heat exchanger, and the electric drive system heat exchange circuit after the heat exchange is configured to perform heat exchange with the air conditioning heat pump heat exchange circuit via the first heat exchanger.

The present disclosure further provides a vehicle, which includes the aforementioned vehicle thermal management system.

### BRIEF DESCRIPTION OF THE DRAWINGS

The following drawings of the present disclosure are incorporated herein as part of the present disclosure to facilitate understanding thereof. The drawings illustrate embodiments of the present disclosure and descriptions thereof, serving to explain the apparatus and principles of the present disclosure. In the drawings:
FIG. 1 is a schematic structural diagram of a vehicle thermal management system according to a preferred embodiment of the present disclosure;
FIG. 2 is a schematic diagram of the working principle of the vehicle thermal management system shown in FIG. 1 under a first operating condition, wherein the motor is operating and the condenser is operating;
FIG. 3 is a schematic diagram of the working principle of the vehicle thermal management system shown in FIG. 1 under a second operating condition, wherein the motor is operating, the engine system heat exchange circuit is operating, and the condenser is operating;
FIG. 4 is a schematic diagram of the working principle of the vehicle thermal management system shown in FIG. 1 under a third operating condition, wherein the motor is operating and the evaporator is operating;
FIG. 5 is a schematic diagram of the working principle of the vehicle thermal management system shown in FIG. 1 under a fourth operating condition, wherein the motor is operating, the engine system heat exchange circuit is operating, and the evaporator is operating; and
FIG. 6 is a schematic diagram of the working principle of the vehicle thermal management system shown in FIG. 1 under a fifth operating condition, wherein the condenser is operating and the evaporator is operating.

**Description of Reference Numerals:**

| | | | |
|---|---|---|---|
| 11: | engine cylinder | 12: | three-way catalytic converter |
| 13: | second heat exchanger | 14: | first heat exchanger |
| 15: | gas-side three-way valve | 16: | air filter |
| 17: | turbocharger | 18: | water-cooled intercooler |
| 19: | engine throttle valve | 21: | second water pump |
| 22: | first water-side three-way valve | 23: | engine water jacket assembly |
| 24: | electronic thermostat | 25: | high-temperature radiator |
| 26: | heating device | 27: | first water tank |
| 28: | second water-side three-way valve | 29: | first four-way valve |
| 31: | first water pump | 32: | third water-side three-way valve |
| 33: | first electronic three-way valve | 34: | motor |
| 35: | second electronic three-way valve | 36: | low-temperature radiator |
| 37: | second water tank | 38: | fourth water-side three-way valve |
| 39: | fifth water-side three-way valve | 40: | second four-way valve |
| 41: | air conditioning compressor | 42: | refrigerant four-way valve |
| 43: | first refrigerant three-way valve | 44: | first electromagnetic control valve |
| 45: | third heat exchanger | 46: | first drying device |
| 47: | first electronic expansion valve | 48: | battery |
| 49: | second refrigerant three-way valve | 50: | third four-way valve |
| 52: | third refrigerant three-way valve | 53: | fourth four-way valve |
| 54: | fifth four-way valve | 55: | sixth four-way valve |
| 56: | second electromagnetic control valve | 57: | third electromagnetic control valve |
| 58: | fourth electromagnetic control valve | 59: | fifth electromagnetic control valve |
| 60: | condenser | 61: | evaporator |
| 62: | second drying device | 63: | second electronic expansion valve |
| 64: | third electronic expansion valve | 71: | engine system heat exchange circuit |
| 72: | electric drive system heat exchange circuit | 73: | air conditioning heat pump heat exchange circuit |
| 74: | engine intake and exhaust heat exchange circuit | 75: | engine cooling heat exchange |
| | | | circuit |
| 81: | first chamber | 82: | second chamber |
| 83: | third chamber | 84: | fourth chamber |
| 85: | fifth chamber | 86: | sixth chamber |
| 87: | seventh chamber | 91: | exhaust port |
| 92: | first bypass water path | 93: | second bypass water path |
| 100: | vehicle thermal management system | | |

### DETAILED DESCRIPTION

In the following description, numerous specific details are set forth to provide a more thorough understanding of the present disclosure. However, it will be apparent to those skilled in the art that the present disclosure may be practiced without one or more of these specific details. In other instances, well-known technical features in the art have not been described to avoid obscuring the present disclosure.

To achieve a thorough understanding of the present disclosure, detailed structures will be set forth in the following description to explain the present disclosure. Obviously, the practice of the present disclosure is not limited to the specific details familiar to those skilled in the art. Preferred embodiments of the present disclosure are described in detail below; however, in addition to these detailed descriptions, the present disclosure may further have other embodiments and should not be construed as being limited to the embodiments set forth herein.

It will be understood that the terms used herein are only for describing specific embodiments and are not intended to limit the present disclosure. The singular forms "a", "an" and "the" are further intended to include the plural forms unless the context clearly indicates otherwise. When the terms "includes" and/or "including" are used in this specification, they specify the presence of the stated features, integers, steps, operations, elements, and/or components, but do not exclude the presence or addition of one or more other features, integers, steps, operations, elements, components, and/or combinations thereof. The terms "upper", "lower", "front", "rear", "left", "right" and similar expressions used in the present disclosure are for illustrative purposes only and are not limiting.

Ordinal numbers such as "first" and "second" referenced in the present disclosure are merely identifiers and do not have any other meanings, such as a specific order or the like. Furthermore, for example, the term "first component" by itself does not imply the existence of a "second component", and the term "second component" by itself does not imply the existence of a "first component".

Hereinafter, specific embodiments of the present disclosure will be described in more detail with reference to the accompanying drawings, which illustrate representative embodiments of the present disclosure and are not intended to limit the present disclosure.

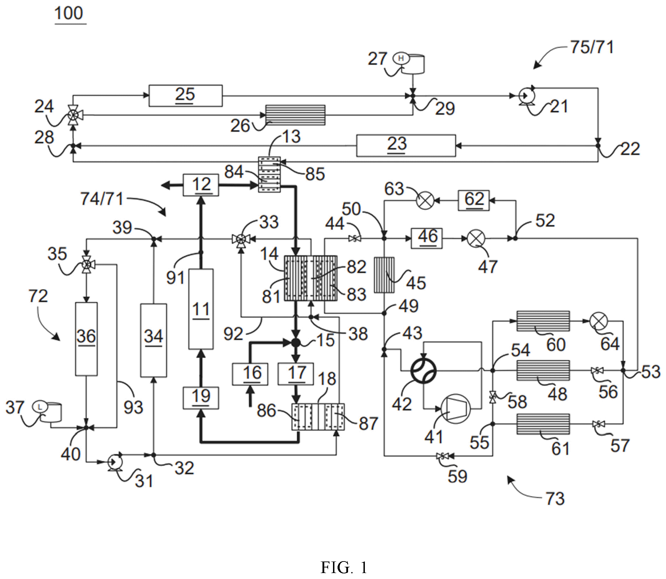

FIG. 1 is a schematic structural diagram of a vehicle thermal management system 100 according to a preferred embodiment of the present disclosure.

The vehicle thermal management system 100 includes an engine system heat exchange circuit 71, which is configured to generate kinetic energy through combustion. In particular, the kinetic energy generated by the combustion of the engine system heat exchange circuit 71 can drive the vehicle to travel.

The engine system heat exchange circuit 71 discharges a first cooling fluid during combustion, and the engine system heat exchange circuit 71 includes an exhaust port 91 through which the first cooling fluid is discharged.

The first cooling fluid is exhaust gas discharged from the engine cylinder 11.

The vehicle thermal management system 100 may further include an air filter 16 and a turbocharger 17, wherein the turbocharger 17 is arranged downstream of the engine system heat exchange circuit 71. The engine system heat exchange circuit 71 utilizes the inertial impetus of the discharged first cooling fluid to drive the turbine of the turbocharger 17, and the turbine drives a coaxially connected impeller. The impeller compresses the air delivered through a pipeline by the air filter 16, so that the compressed air enters the engine cylinder 11.

The vehicle thermal management system 100 further includes a motor 34 and an electric drive system heat exchange circuit 72, wherein the electric drive system heat exchange circuit 72 performs heat exchange with the motor 34. A second cooling fluid is provided in the heat exchange management method of the motor 34 to reduce or increase the temperature of the motor 34. That is, the second cooling fluid is provided in the electric drive system heat exchange circuit 72. The second cooling fluid is a cooling liquid.

The vehicle thermal management system 100 further includes an air conditioning heat pump heat exchange circuit 73, which is configured to adjust the temperature in the passenger compartment. The air conditioning heat pump heat exchange circuit 73 is a heat pump air conditioning system. The air conditioning heat pump heat exchange circuit 73 includes an air conditioning compressor 41, an evaporator 61, and a condenser 60. The air conditioning compressor 41, the evaporator 61, and the condenser 60 are in communication with each other. The air conditioning compressor 41 can generate a third cooling fluid, which is an air conditioning refrigerant. The third cooling fluid can flow into the evaporator 61 through the air conditioning heat pump heat exchange circuit 73 to perform heat exchange with the air flowing through the evaporator 61, thereby reducing the temperature of the air. The third cooling fluid can further flow into the condenser 60 through the air conditioning heat pump heat exchange circuit 73 to perform heat exchange with the air flowing through the condenser 60, thereby increasing the temperature of the condenser 60.

To improve the utilization rate of the vehicle thermal management system, the vehicle thermal management system 100 further includes a first heat exchanger 14. The first heat exchanger 14 includes three chambers, namely a first chamber 81, a second chamber 82, and a third chamber 83, which are not in communication with each other. The first heat exchanger 14 is a plate heat exchanger. Preferably, the first heat exchanger 14 is a double-plate heat exchanger. The first chamber 81 is in communication with the engine system heat exchange circuit 71, and the first cooling fluid discharged from the engine system heat exchange circuit 71 can enter the first chamber 81. The second chamber 82 is in communication with the electric drive system heat exchange circuit 72, and the second cooling fluid in the electric drive system heat exchange circuit 72 can enter the second chamber 82. The third chamber 83 is in communication with the air conditioning heat pump heat exchange circuit 73, and the third cooling fluid in the air conditioning heat pump heat exchange circuit 73 can enter the third chamber 83.

The first cooling fluid, the second cooling fluid, and the third cooling fluid can perform heat exchange in the first heat exchanger 14. Specifically, the second chamber 82 is located between the first chamber 81 and the third chamber 83. The second chamber 82 is located between the first chamber 81 and the third chamber 83 in a direction perpendicular to the flow direction of the fluids. The second cooling fluid in the second chamber 82 is located between the first cooling fluid in the first chamber 81 and the third cooling fluid in the third chamber 83. The second cooling fluid in the second chamber 82 directly performs heat exchange with the first cooling fluid in the first chamber 81. The second cooling fluid in the second chamber 82 directly performs heat exchange with the third cooling fluid in the third chamber 83. The first chamber 81 and the third chamber 83 are separated by the second chamber 82 and are not adjacent to each other. The first cooling fluid in the first chamber 81 and the third cooling fluid in the third chamber 83 do not directly perform heat exchange.

Each chamber has an inlet and an outlet. The first heat exchanger 14 has three inlets and three outlets. The first chamber 81 has a first inlet and a first outlet, the first cooling fluid enters the first chamber 81 through the first inlet, and the first cooling fluid in the first chamber 81 is discharged through the first outlet. The second chamber 82 has a second inlet and a second outlet, the second cooling fluid enters the second chamber 82 through the second inlet, and the second cooling fluid in the second chamber 82 is discharged through the second outlet. The third chamber 83 has a third inlet and a third outlet, the third cooling fluid enters the third chamber 83 through the third inlet, and the third cooling fluid in the third chamber 83 is discharged through the third outlet.

Furthermore, the flow directions of the fluids in two adjacent chambers among the three chambers are opposite. The flow directions of the cooling fluids in the adjacent chambers among the first chamber 81, the second chamber 82, and the third chamber 83 are opposite. This improves the heat exchange efficiency.

The first chamber 81 is adjacent to the second chamber 82. The flow direction of the first cooling fluid in the first chamber 81 is opposite to the flow direction of the second cooling fluid in the second chamber 82. The first cooling fluid in the first chamber 81 flows from the first inlet to the first outlet. The second cooling fluid in the second chamber 82 flows from the second inlet to the second outlet. The first inlet and the second inlet are respectively located on two sides of the first heat exchanger 14, for example, opposite sides. The first inlet and the second inlet are respectively located on two sides of the first heat exchanger 14 along the flow direction of the fluids. The first outlet and the second outlet are respectively located on two sides of the first heat exchanger 14, for example, opposite sides. The first outlet and the second outlet are respectively located on two sides of the first heat exchanger 14 along the flow direction of the fluids. In the present embodiment, "opposite" refers to the surfaces of the first heat exchanger 14 facing in opposite directions.

The third chamber 83 is adjacent to the second chamber 82. The flow direction of the third cooling fluid in the third chamber 83 is opposite to the flow direction of the second cooling fluid in the second chamber 82. The third cooling fluid in the third chamber 83 flows from the third inlet to the third outlet. The flow direction of the first cooling fluid in the first chamber 81 is the same as the flow direction of the third cooling fluid in the third chamber 83. The third inlet and the second inlet are respectively located on opposite sides of the first heat exchanger 14. The third inlet and the second inlet are respectively located on opposite sides of the first heat exchanger 14 along the flow direction of the fluids. The third outlet and the second outlet are respectively located on opposite sides of the first heat exchanger 14. The third outlet and the second outlet are respectively located on opposite sides of the first heat exchanger 14 along the flow direction of the fluids. Thus, the flow direction of the first cooling fluid in the first heat exchanger 14 is the same as the flow direction of the third cooling fluid.

The inlets and outlets of the first chamber 81, the second chamber 82, and the third chamber 83 are alternately arranged in sequence on the same side, such that the flow directions of the cooling fluids in adjacent chambers are opposite. The first inlet, the second outlet, and the third inlet are sequentially arranged on one side. The first outlet, the second inlet, and the third outlet are sequentially arranged on the other side. Thus, the flow directions of the cooling fluids in adjacent chambers are opposite. That is, the first inlet of the first chamber 81, the second outlet of the second chamber 82, and the third inlet of the third chamber 83 are located on the same side of the first heat exchanger 14. The first outlet of the first chamber 81, the second inlet of the second chamber 82, and the third outlet of the third chamber 83 are located on the same side of the first heat exchanger 14.

According to the present disclosure, the vehicle thermal management system 100 includes an engine system heat exchange circuit 71, an electric drive system heat exchange circuit 72, an air conditioning heat pump heat exchange circuit 73, and a first heat exchanger 14. The first heat exchanger 14 includes three chambers, namely a first chamber 81, a second chamber 82, and a third chamber 83. The first chamber 81 is in communication with the engine system heat exchange circuit 71. The second chamber 82 is in communication with the electric drive system heat exchange circuit 72. The third chamber 83 is in communication with the air conditioning heat pump heat exchange circuit 73. The second chamber 82 is located between the first chamber 81 and the third chamber 83, that is, the first chamber 81 and the third chamber 83 are separated. Thus, the engine system heat exchange circuit 71, the electric drive system heat exchange circuit 72, and the air conditioning heat pump heat exchange circuit 73 share the first heat exchanger 14. The heat from the first chamber 81 is first transferred to the second chamber 82, and then transferred to the third chamber 83 through the second chamber 82. The first chamber 81 and the third chamber 83 do not directly exchange heat, such that the heat discharged from the engine system heat exchange circuit 71 is first transferred to the electric drive system heat exchange circuit 72 and then to the air conditioning heat pump heat exchange circuit 73, avoiding overpressure caused by the direct heat exchange between the air conditioning heat pump heat exchange circuit 73 and the heat discharged from the engine system heat exchange circuit 71.

Furthermore, when the vehicle thermal management system 100 is in an operating state, the temperature ranges of adjacent chambers among the first chamber 81, the second chamber 82, and the third chamber 83 are different. The temperature range in the first chamber 81 is higher than that in the second chamber 82. The temperature range in the second chamber 82 is higher than that in the third chamber 83. The temperature ranges of the first chamber 81, the second chamber 82, and the third chamber 83 exhibit a stepwise relationship in sequence. Thus, the temperature ranges of adjacent chambers among the first chamber 81, the second chamber 82, and the third chamber 83 are stepwise, which not only enables heat exchange but also avoids thermal buffering.

For example, the temperature of the first cooling fluid > the temperature of the second cooling fluid > the temperature of the third cooling fluid. The second cooling fluid in the second chamber 82 first absorbs the heat of the first cooling fluid in the first chamber 81, such that the temperature of the first cooling fluid in the first chamber 81 decreases and the temperature of the second cooling fluid in the second chamber 82 increases. Thus, the temperature of the first cooling fluid discharged from the first chamber 81 is lower than the temperature of the first cooling fluid entering the first chamber 81, and the temperature of the second cooling fluid discharged from the second chamber 82 is higher than the temperature of the second cooling fluid entering the second chamber 82. In this way, the temperature of the first cooling fluid in the first chamber 81 can be reduced below the condensation temperature, facilitating the precipitation of a large amount of condensate water from the first cooling fluid.

The heated second cooling fluid is configured to exchange heat with the third cooling fluid in the third chamber 83. The third cooling fluid in the third chamber 83 absorbs the heat of the heated second cooling fluid in the second chamber 82. The second cooling fluid in the second chamber 82 is cooled again, and the third cooling fluid in the third chamber 83 is heated at the same time. Thus, the temperature of the third cooling fluid discharged from the third chamber 83 is higher than the temperature of the third cooling fluid entering the third chamber 83. In this way, the temperature of the first cooling fluid decreases step by step in the first heat exchanger 14, reducing the heat exchange pressure difference, and the third cooling fluid is less likely to cause overpressure during heat exchange.

A first temperature corresponds to the first chamber, a second temperature corresponds to the second chamber, and a third temperature corresponds to the third chamber. For example, the temperature range corresponding to the first temperature is 80 to 100°C, the temperature range corresponding to the second temperature is 40 to 65°C, and the temperature range corresponding to the third temperature is 10 to 35°C. In this way, the second cooling fluid absorbs the temperature of the first cooling fluid, reducing the temperature difference between the second cooling fluid and the first cooling fluid. The third cooling fluid absorbs the temperature of the second cooling fluid, reducing the temperature difference between the third cooling fluid and the second cooling fluid. The temperature difference between the second cooling fluid and the first cooling fluid is smaller than the temperature difference between the third cooling fluid and the first cooling fluid. Thus, the temperature of the first cooling fluid decreases step by step in the first heat exchanger 14, reducing the heat exchange pressure difference, and the third cooling fluid is less likely to cause overpressure during heat exchange.

To improve the cooling efficiency of the first cooling fluid, the vehicle thermal management system 100 further includes a second heat exchanger 13, which may be a cooler. The second heat exchanger 13 is located upstream of the first heat exchanger 14 along the flow direction of the first cooling fluid. The second heat exchanger 13 first performs heat exchange on the first cooling fluid, and the first cooling fluid after heat exchange then enters the first heat exchanger 14. For example, the second heat exchanger 13 first reduces the temperature of the first cooling fluid, and the first cooling fluid with reduced temperature then enters the first heat exchanger 14.

The engine system heat exchange circuit 71 further includes an engine cooling heat exchange circuit 75 and an engine intake and exhaust heat exchange circuit 74. A fourth cooling fluid is provided in the engine cooling heat exchange circuit 75. The temperature of the fourth cooling fluid is lower than that of the first cooling fluid. The first cooling fluid is configured to perform heat exchange with the fourth cooling fluid in the second heat exchanger 13. The first cooling fluid discharged from the second heat exchanger 13 can enter the first heat exchanger 14.

Specifically, the second heat exchanger 13 includes a fourth chamber 84 and a fifth chamber 85, which are not in communication with each other. The first cooling fluid and the fourth cooling fluid can perform heat exchange in the second heat exchanger 13. Specifically, the fourth chamber 84 is adjacent to the fifth chamber 85. The fourth chamber 84, the engine intake and exhaust heat exchange circuit 74, and the first heat exchanger 14 are in communication with each other. The first chamber 81 is in communication with the engine intake and exhaust heat exchange circuit 74. Preferably, the fourth chamber 84 connects the engine intake and exhaust heat exchange circuit 74 and the first chamber 14. The first cooling fluid in the engine intake and exhaust heat exchange circuit 74 first flows through the fourth chamber 84 and then through the first chamber 81, and is cooled by the second heat exchanger 13 and the first heat exchanger 14 to achieve early cooling and condensation. The first cooling fluid discharged from the fourth chamber 84 can enter the first chamber 81. The fifth chamber 85 is in communication with the engine cooling heat exchange circuit 75, and the fourth cooling fluid in the engine cooling heat exchange circuit 75 can enter the fifth chamber 85.

The second heat exchanger 13 is located upstream of the first heat exchanger 14 along the flow direction of the first cooling fluid. The first cooling fluid in the fourth chamber 84 directly performs heat exchange with the fourth cooling fluid in the fifth chamber 85. The first cooling fluid discharged from the engine intake and exhaust heat exchange circuit 74 first flows through the second heat exchanger 13 to perform heat exchange with the fourth cooling fluid in the second heat exchanger 13. The cooled first cooling fluid discharged from the second heat exchanger 13 then performs heat exchange with the second cooling fluid in the first heat exchanger 14, such that the first cooling fluid undergoes multiple heat exchanges, improving the utilization rate of the first cooling fluid.

The engine intake and exhaust heat exchange circuit 74 includes an engine cylinder 11, a three-way catalytic converter 12, a gas-side three-way valve 15, an air filter 16, a turbocharger 17, and an engine throttle valve 19. The engine cylinder 11, the three-way catalytic converter 12, the second heat exchanger 13, the first heat exchanger 14, the gas-side three-way valve 15, the air filter 16, the turbocharger 17, the water-cooled intercooler 18, and the engine throttle valve 19 are all sequentially connected through gas-side connecting pipelines. After the first cooling fluid discharged from the engine cylinder 11 passes through the three-way catalytic converter 12, a part of the first cooling fluid is discharged to the outside of the vehicle, and the other part enters the second heat exchanger 13. The second heat exchanger 13 is connected in series with the first chamber 81 of the first heat exchanger 14. The air filter 16 and the outlet of the first chamber 81 of the first heat exchanger 14 are connected in parallel to the turbocharger 17.

The engine cooling heat exchange circuit 75 includes a second water pump 21, a first water-side three-way valve 22, an engine water jacket assembly 23, an electronic thermostat 24, a high-temperature radiator 25, a heating device 26, a first water tank 27, a second water-side three-way valve 28, and a first four-way valve 29. The fourth cooling fluid is stored in the first water tank 27. Along the flow direction of the fourth cooling fluid, the first water tank 27 is sequentially connected to the second water pump 21, the first water-side three-way valve 22, the engine water jacket assembly 23 and the second heat exchanger 13 (connected in parallel), the second water-side three-way valve 28, the electronic thermostat 24, and the high-temperature radiator 25 and the heating device 26 (connected in parallel). The fourth cooling fluid discharged from the first water-side three-way valve 22 enters the engine water jacket assembly 23 and the second heat exchanger 13 respectively. The fourth cooling fluid discharged from the engine water jacket assembly 23 and the second heat exchanger 13 respectively enters the second water-side three-way valve 28. The fourth cooling fluid discharged from the electronic thermostat 24 enters the high-temperature radiator 25 and the heating device 26 respectively. The fourth cooling fluid discharged from the high-temperature radiator 25 and the heating device 26 then enters the first four-way valve 29 through two inlets of the first four-way valve 29. The two outlets of the first four-way valve 29 are in communication with the first water tank 27 and the second water pump 21.

To further reduce the temperature of the first cooling fluid flowing back to the engine system heat exchange circuit 71, the vehicle thermal management system 100 further includes a water-cooled intercooler 18. The water-cooled intercooler 18 is arranged between the first heat exchanger 14 and the engine system heat exchange circuit 71 (specifically, the engine intake and exhaust heat exchange circuit 74). The water-cooled intercooler 18 can reduce the temperature of the first cooling fluid from the first heat exchanger 14.

The water-cooled intercooler 18 includes a sixth chamber 86 and a seventh chamber 87, which are not in communication with each other. The sixth chamber 86 is adjacent to the seventh chamber 87.

The sixth chamber 86 is in communication with the first heat exchanger 14, such that the first cooling fluid discharged from the first heat exchanger 14 can enter the sixth chamber 86. Specifically, the first chamber 81, the sixth chamber 86, and the engine intake and exhaust heat exchange circuit 74 are in communication with each other. The first cooling fluid in the engine intake and exhaust heat exchange circuit 74 first flows through the first chamber 81 and then through the sixth chamber 86, and is cooled by the first heat exchanger 14 and the water-cooled intercooler 18. The first cooling fluid discharged from the sixth chamber 86 flows back to the engine intake and exhaust heat exchange circuit 74. This can improve combustion efficiency. The water-cooled intercooler 18 can further reduce the temperature of the first cooling fluid to ensure that the mixed gas is within the optimal temperature range.

The seventh chamber 87 is in communication with the electric drive system heat exchange circuit 72, such that the second cooling fluid in the electric drive system heat exchange circuit 72 can enter the seventh chamber 87. The seventh chamber 87 is further in communication with the first heat exchanger 14, such that the second cooling fluid discharged from the seventh chamber 87 flows to the first heat exchanger 14. Specifically, the electric drive system heat exchange circuit 72, the seventh chamber 87, and the second chamber 82 are in communication with each other. The second cooling fluid in the electric drive system heat exchange circuit 72 may first flow through the water-cooled intercooler 18 and then flow to the first heat exchanger 14. The first cooling fluid and the second cooling fluid can perform heat exchange in the water-cooled intercooler 18.

The water-cooled intercooler 18 is located downstream of the first heat exchanger 14 along the flow direction of the first cooling fluid. The water-cooled intercooler 18 is located upstream of the first heat exchanger 14 along the flow direction of the second cooling fluid. The flow directions of the cooling fluids in the sixth chamber 86 and the seventh chamber 87 are opposite. The flow direction of the first cooling fluid in the sixth chamber 86 is opposite to the flow direction of the second cooling fluid in the seventh chamber 87. This can improve the heat exchange efficiency. The first cooling fluid in the sixth chamber 86 directly performs heat exchange with the second cooling fluid in the seventh chamber 87. Thus, the first heat exchanger 14 can reduce the condensate water generated by the temperature decrease of the compressed air through the water-cooled intercooler 18, thereby exerting a good anti-corrosion effect on the metal components of the water-cooled intercooler 18.

The first cooling fluid discharged from the engine system heat exchange circuit 71 (specifically, the engine intake and exhaust heat exchange circuit 74) first flows through the first heat exchanger 14 to perform heat exchange with the second cooling fluid in the first heat exchanger 14. The cooled first cooling fluid discharged from the first heat exchanger 14 then performs heat exchange with the second cooling fluid in the water-cooled intercooler 18, thereby further reducing the temperature of the first cooling fluid. The first cooling fluid after being cooled again flows back to the engine system heat exchange circuit 71.

It is understandable that the water-cooled intercooler 18 is located upstream of the first heat exchanger 14 along the flow direction of the second cooling fluid, and the temperature of the second cooling fluid in the water-cooled intercooler 18 is lower than that of the second cooling fluid in the first heat exchanger 14. The second cooling fluid in the electric drive system heat exchange circuit 72 first flows through the water-cooled intercooler 18 to perform heat exchange with the first cooling fluid in the water-cooled intercooler 18. The heated second cooling fluid discharged from the water-cooled intercooler 18 then performs heat exchange with the first cooling fluid in the first heat exchanger 14, such that the temperature of the second cooling fluid increases again. The second cooling fluid heated again flows back to the electric drive system heat exchange circuit 72. The electric drive system heat exchange circuit 72 can not only absorb the waste heat of the motor 34 but also absorb the heat of the first cooling fluid after turbocharging.

For example, the temperature of the first cooling fluid discharged from the engine system heat exchange circuit 71 is T1, the temperature of the first cooling fluid discharged from the first heat exchanger 14 is T2, and the temperature of the first cooling fluid discharged from the water-cooled intercooler 18 is T3. The first cooling fluid gradually decreases in temperature as it flows through the first heat exchanger 14 and the water-cooled intercooler 18 along the flow direction of the first cooling fluid. The temperature of the second cooling fluid in the electric drive system heat exchange circuit 72 is T4, the temperature of the second cooling fluid discharged from the water-cooled intercooler 18 is T5, and the temperature of the second cooling fluid discharged from the first heat exchanger 14 is T6. The second cooling fluid gradually increases in temperature as it flows through the water-cooled intercooler 18 and the first heat exchanger 14 along the flow direction of the second cooling fluid. T1 > T2 > T3, and T4 < T5 < T6. T1 > T5 and T2 > T4.

To ensure heat exchange efficiency, each channel has an inlet and an outlet. The water-cooled intercooler 18 has two inlets and two outlets. The inlet of the sixth chamber 86 is a fourth inlet, which is located on a first side of the water-cooled intercooler 18. The inlet of the seventh chamber 87 is a fifth inlet, which is located on a second side of the water-cooled intercooler 18. The outlet of the sixth chamber 86 is a fourth outlet, which is located on the second side of the water-cooled intercooler 18. The outlet of the seventh chamber 87 is a fifth outlet, which is located on the first side of the water-cooled intercooler 18.

The first cooling fluid enters the sixth chamber 86 through the fourth inlet, and the first cooling fluid in the sixth chamber 86 is discharged through the fourth outlet. The sixth chamber 86 is in communication with the first chamber 81. The first outlet is in communication with the fourth inlet. The fourth outlet is in communication with the air inlet of the engine system heat exchange circuit 71. The first cooling fluid discharged from the first outlet enters the sixth chamber 86 through the fourth inlet.

The second cooling fluid enters the seventh chamber 87 through the fifth inlet, and the second cooling fluid in the seventh chamber 87 is discharged through the fifth outlet. The fifth outlet is in communication with the second inlet. The fifth inlet is in communication with the electric drive system heat exchange circuit 72. The second cooling fluid discharged from the fifth outlet enters the second chamber 86 through the second inlet. This improves the heat exchange efficiency.

The sixth chamber 86 is adjacent to the seventh chamber 87. The fourth inlet of the sixth chamber 86 and the fifth inlet of the seventh chamber 87 are respectively located on two sides of the water-cooled intercooler 18. The fourth inlet of the sixth chamber 86 and the fifth inlet of the seventh chamber 87 are respectively located on two sides of the water-cooled intercooler 18 along the flow direction of the fluids. The fourth outlet of the sixth chamber 86 and the fifth outlet of the seventh chamber 87 are respectively located on two sides of the water-cooled intercooler 18. The fourth outlet of the sixth chamber 86 and the fifth outlet of the seventh chamber 87 are respectively located on two sides of the water-cooled intercooler 18 along the flow direction of the fluids.

The flow direction of the first cooling fluid in the sixth chamber 86 is opposite to the flow direction of the second cooling fluid in the seventh chamber 87. The first cooling fluid in the sixth chamber 86 flows from the fourth inlet to the fourth outlet. The second cooling fluid in the seventh chamber 87 flows from the fifth inlet to the fifth outlet. The fourth inlet and the fifth inlet are respectively located on opposite sides of the water-cooled intercooler 18. The fourth outlet and the fifth outlet are respectively located on opposite sides of the water-cooled intercooler 18.

The first cooling fluid decreases in temperature in the first heat exchanger 14, such that the moisture in the cooled first cooling fluid condenses and precipitates. The precipitated condensate water is discharged from the first heat exchanger 14. The vehicle thermal management system 100 further includes an exhaust port 91, which delivers the first cooling fluid into the first chamber 81. The condensate water is weakly acidic and tends to cause corrosion to metals. To facilitate the discharge of the condensate water, the first heat exchanger 14 is located above the engine system heat exchange circuit 71 along the height direction of the engine. The second heat exchanger 13 is located above the first heat exchanger 14 along the height direction of the engine. The first heat exchanger 14, the second heat exchanger 13, and the exhaust port 91 are arranged to be inclined sequentially, such that the condensate water condensed and precipitated through early cooling is discharged through the exhaust port 91. The exhaust port 91 extends obliquely downward toward the engine along the height direction of the engine, such that the condensate water generated by the first heat exchanger 14 is discharged through the exhaust port 91 under the action of gravity. Thus, the moisture in the first cooling fluid can be removed before the first cooling fluid enters the first chamber 81, thereby achieving early dehumidification.

To better regulate the temperature of the third cooling fluid in the air conditioning heat pump heat exchange circuit 73, the vehicle thermal management system 100 further includes a third heat exchanger 45, which is in communication with the air conditioning heat pump heat exchange circuit 73. The third heat exchanger 45 may further be regarded as part of the air conditioning heat pump heat exchange circuit 73. The third heat exchanger 45 is configured to exchange heat with the outside. The third heat exchanger 45 is connected in parallel with the first heat exchanger 14. The third heat exchanger 45 can assist or replace the first heat exchanger 14 to ensure that the temperature of the second cooling fluid in the air conditioning heat pump heat exchange circuit 73 can be regulated. The third cooling fluid flows through the third heat exchanger 45. The third heat exchanger 45 can enable the third cooling fluid to perform heat exchange with the outside air to regulate the temperature of the third cooling fluid. Thus, multiple heat exchanges can be achieved, improving the heat exchange efficiency of the air conditioning heat pump heat exchange circuit 73.

The electric drive system heat exchange circuit 72 further includes a first water pump 31, a third water-side three-way valve 32, a first electronic three-way valve 33, a motor 34, a second electronic three-way valve 35, a low-temperature radiator 36, a second water tank 37, a fourth water-side three-way valve 38, a fifth water-side three-way valve 39, and a second four-way valve 40. The second cooling fluid is stored in the second water tank 37. Along the flow direction of the second cooling fluid, the second water tank 37 is sequentially connected to the first water pump 31, the third water-side three-way valve 32, and the motor 34 and the water-cooled intercooler 18 (connected in parallel). The second cooling fluid discharged from the third water-side three-way valve 32 flows to the motor 34 and the water-cooled intercooler 18 respectively. The water-cooled intercooler 18 is located upstream of the first heat exchanger 14 along the flow direction of the second cooling fluid.

The second chamber 82 of the first heat exchanger 14 is further connected in parallel with a first bypass water path 92. The second cooling fluid discharged from the water-cooled intercooler 18 enters the second chamber 82 of the first heat exchanger 14 and the first bypass water path 92 respectively. The second cooling fluid discharged from the second chamber 82 of the first heat exchanger 14 and the first bypass water path 92 all flows to the first electronic three-way valve 33. The first electronic three-way valve 33, the fifth water-side three-way valve 39, and the second electronic three-way valve 35 are sequentially connected in series. The motor 34 is connected in series with the fifth water-side three-way valve 39. The second cooling fluid discharged from the motor 34 enters the fifth water-side three-way valve 39 and then flows to the second electronic three-way valve 35.

The low-temperature radiator 36 is located downstream of the second electronic three-way valve 35 along the flow direction of the second cooling fluid. The low-temperature radiator 36 is further connected in parallel with a second bypass water path 93. The second cooling fluid discharged from the second electronic three-way valve 35 flows to either the low-temperature radiator 36 or the second bypass water path 93. The second cooling fluid discharged from the low-temperature radiator 36 or the second bypass water path 93 flows to the second four-way valve 40. Three inlets of the second four-way valve 40 are in communication with the second water tank 37, the low-temperature radiator 36, and the second bypass water path 93 respectively, and one outlet of the second four-way valve 40 is in communication with the first water pump 31.

The electric drive system heat exchange circuit 72 and the air conditioning heat pump heat exchange circuit 73 perform heat exchange through the second chamber 82 and the third chamber 83, and the air conditioning heat pump heat exchange circuit 73 is configured to use the heat from the heat exchange to provide heat for the passenger compartment. In this way, the first heat exchanger 14 can not only be configured to exchange heat but also for waste heat reuse to supply heat to the passenger compartment. The second cooling fluid of the electric drive system heat exchange circuit 72 enters the second chamber 82. The third chamber 83 is in communication with the air conditioning heat pump heat exchange circuit 73. The third cooling fluid of the air conditioning heat pump heat exchange circuit 73 enters the third chamber 83. The second cooling fluid in the second chamber 82 is configured to perform heat exchange with the third cooling fluid in the third chamber 83. The air conditioning heat pump heat exchange circuit 73 is configured to use the heat from the heat exchange to provide heat for the passenger compartment.

The air conditioning heat pump heat exchange circuit 73 includes an air conditioning compressor 41, a refrigerant four-way valve 42, a first refrigerant three-way valve 43, a first electromagnetic control valve 44, a third heat exchanger 45, a first drying device 46, a first electronic expansion valve 47, a battery 48, a second refrigerant three-way valve 49, a third four-way valve 50, a third refrigerant three-way valve 52, a fourth four-way valve 53, a fifth four-way valve 54, a sixth four-way valve 55, a second electromagnetic control valve 56, a third electromagnetic control valve 57, a fourth electromagnetic control valve 58, a fifth electromagnetic control valve 59, a condenser 60, an evaporator 61, a second drying device 62, a second electronic expansion valve 63, and a third electronic expansion valve 64. The battery 48 is a power battery that can supply power for the vehicle to travel. The electronic expansion valves function as adiabatic throttling. Both the first drying device 46 and the second drying device 62 are configured as liquid storage dryers.

The air conditioning compressor 41 can generate the third cooling fluid. The exhaust port of the air conditioning compressor 41 is sequentially connected to the refrigerant four-way valve 42 and the first refrigerant three-way valve 43. The third heat exchanger 45 is connected in parallel with the third chamber 83 of the first heat exchanger 14. The third cooling fluid discharged from the first refrigerant three-way valve 43 enters either the third heat exchanger 45 or the third chamber 83 of the first heat exchanger 14 respectively. The third chamber 83 of the first heat exchanger 14 is connected in series with the first electromagnetic control valve 44. The second cooling fluid discharged from the first electromagnetic control valve 44 and the third heat exchanger 45 respectively flows to the third four-way valve 50.

The first drying device 46 and the second drying device 62 are connected in parallel. The first drying device 46 is connected in series with the first electronic expansion valve 47. The second drying device 62 is connected in series with the second electronic expansion valve 63. The second cooling fluid discharged from the third four-way valve 50 flows to the first drying device 46 and the second drying device 62 respectively. The third cooling fluid discharged from the first electronic expansion valve 47 and the second electronic expansion valve 63 both flows to the third refrigerant three-way valve 52. The third refrigerant three-way valve 52 is connected in series with the fourth four-way valve 53. The fourth four-way valve 53 is further in communication with the condenser 60, the battery 48, and the evaporator 61.

The condenser 60, the battery 48, and the evaporator 61 are connected in parallel. The third cooling fluid from the fourth four-way valve 53 enters the condenser 60, the battery 48, and the evaporator 61 respectively, or the third cooling fluid in the condenser 60, the battery 48, and the evaporator 61 all enters the fourth four-way valve 53. The condenser 60 is connected in series with the third electronic expansion valve 64, and the third electronic expansion valve 64 controls the third cooling fluid flowing through the condenser 60. The battery 48 is connected in series with the second electromagnetic control valve 56, and the second electronic expansion valve 63 controls the third cooling fluid flowing through the battery 48. The third electromagnetic control valve 57, the evaporator 61, the sixth four-way valve 55, and the fourth electromagnetic control valve 58 are connected in series, and the third electromagnetic control valve 57 controls the third cooling fluid flowing through the evaporator 61. The fourth electromagnetic control valve 58, the battery 48, and the condenser 60 are connected in parallel. The fourth electromagnetic control valve 58, the battery 48, and the condenser 60 are respectively in communication with the air conditioning compressor 41.

The vehicle thermal management system 100 of the present disclosure is used in an EGR (Exhaust Gas Re-circulation) system. The first cooling fluid discharged from the engine system heat exchange circuit 71 is exhaust gas. The first heat exchanger 14 is disposed between the second heat exchanger 13 and the turbocharger 17. The second heat exchanger 13 serves as a primary cooler, and the first heat exchanger 14 serves as a secondary cooler, thereby reducing the temperature and humidity of the exhaust gas in multiple stages. In particular, the first heat exchanger 14 can reduce the temperature of the exhaust gas to below the condensation temperature, facilitating the precipitation of a large amount of condensate water from the exhaust gas. This reduces the humidity of the mixed gas entering the turbocharger 17 and the air filter 16, ultimately reducing the condensate water generated by the temperature decrease of the compressed air through the water-cooled intercooler 18, solving the problem of condensation, dew formation, and icing in the engine system heat exchange circuit 71 after the compression and intercooling of intake air, reducing the acidic corrosion in the first cooling fluid, and exerting a good anti-corrosion effect on the metal components of the water-cooled intercooler 18.

The first heat exchanger 14 can realize heat interaction among multiple systems. Specifically, the first heat exchanger 14 can realize mutual heat transfer among thermodynamic fluids including exhaust gas, cooling liquid, and refrigerant. The first heat exchanger 14 can not only dehumidify the exhaust gas but also realize heat interaction among three systems: the electric drive system heat exchange circuit 72, the exhaust port 91, and the air conditioning heat pump heat exchange circuit 73. The electric drive system heat exchange circuit 72 utilizes the waste heat of the exhaust gas from the engine system heat exchange circuit 71, and the air conditioning heat pump heat exchange circuit 73 realizes heat interaction with the exhaust gas of the engine system heat exchange circuit 71 and the electric drive system heat exchange circuit 73 through the refrigerant. It is suitable for hybrid vehicles, enabling more complex and comprehensive vehicle heat interaction and reducing vehicle energy consumption.

Thus, the vehicle thermal management system 100 of the present disclosure improves the fuel economy of the turbocharged engine system heat exchange circuit and optimizes the knocking problem. Automakers adopt low-pressure EGR technology, and the intake temperature of the engine system heat exchange circuit 71 will not be too high, reducing the condensate water at the cold end of the intercooling system and avoiding corrosion.

The vehicle thermal management system 100 is used in a vehicle, which may be a hybrid vehicle. The hybrid vehicle has a pure electric mode and a hybrid mode. The operation of the vehicle thermal management system 100 under different environments is described below.

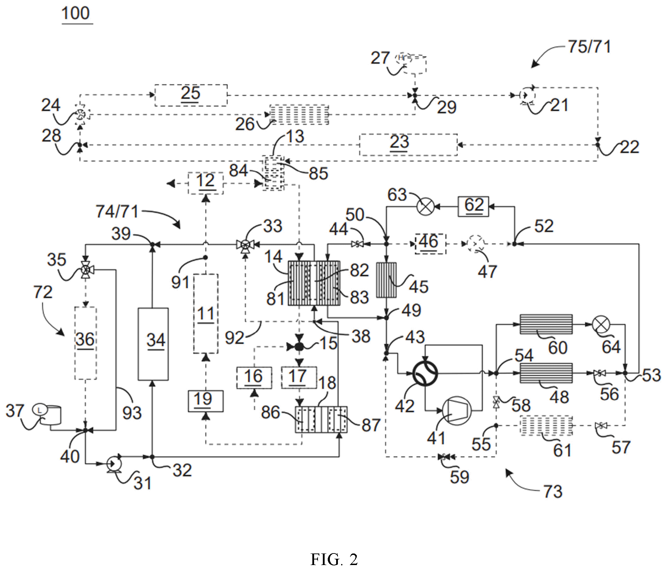

FIG. 2 illustrates the operating condition of the vehicle thermal management system 100 applicable to the pure electric mode in a low-temperature environment.

Under this operating condition, when the vehicle thermal management system 100 is in the first operating state, the motor 34 of the vehicle is in operation, and the engine system heat exchange circuit 71 is not in operation. Heat interaction occurs between the electric drive system heat exchange circuit 72 and the air conditioning heat pump heat exchange circuit 73. The electric drive system heat exchange circuit 72 and the air conditioning heat pump heat exchange circuit 73 are configured to perform heat exchange through the first heat exchanger 14. The second cooling fluid in the second chamber 82 is configured to perform heat exchange with the third cooling fluid in the third chamber 83. The waste heat of the motor 34 in the vehicle thermal management system 100 can be transferred to the air conditioning heat pump heat exchange circuit 73, and the air conditioning heat pump heat exchange circuit 73 provides heat to the passenger compartment and the battery 48.

Specifically, the second water tank 37 discharges the second cooling fluid. The second cooling fluid flows through the first water pump 31 and the third water-side three-way valve 32. The second cooling fluid flowing out of the third water-side three-way valve 32 enters the motor 34 and the water-cooled intercooler 18 respectively. The second cooling fluid discharged from the water-cooled intercooler 18 flows into the second chamber 82 of the first heat exchanger 14. The second cooling fluid discharged from the second chamber 82 flows to the fifth water-side three-way valve 39 through the first electronic three-way valve 33. The second cooling fluid discharged from the motor 34 further flows to the fifth water-side three-way valve 39. The low-temperature radiator 36 is not in operation. The second cooling fluid discharged from the fifth water-side three-way valve 39 flows back to the second four-way valve 40 through the second electronic three-way valve 35 and the second bypass water path 93, and finally flows to the first water pump 31 through the second four-way valve 40.

The condenser 60 is in operation, and the evaporator 61 is not in operation. The condenser 60 and the battery 48 are connected in parallel. The air conditioning compressor 41 discharges the third cooling fluid, and the refrigerant four-way valve 42 switches to the heating mode. The third cooling fluid flows to the fifth four-way valve 54 through the refrigerant four-way valve 42. The third cooling fluid discharged from the fifth four-way valve 54 flows to the condenser 60 and the battery 48 respectively. Both the condenser 60 and the battery 48 are located upstream of the third heat exchanger 45 along the flow direction of the third cooling fluid. The third cooling fluid can cool down the battery 48. The third cooling fluid absorbs heat, and the battery 48 releases heat. The third cooling fluid in the condenser 60 is configured to perform heat exchange with the outside air. The third cooling fluid releases heat, and the air absorbs heat to increase the temperature of the air, so that the heated air flows into the passenger compartment, thereby increasing the temperature in the passenger compartment. The third cooling fluid discharged from the condenser 60 and the battery 48 respectively flows to the fourth four-way valve 53. The third cooling fluid discharged from the fourth four-way valve 53 flows to the third refrigerant three-way valve 52.

The third refrigerant three-way valve 52 is connected in series with the second drying device 62. The third cooling fluid discharged from the third refrigerant three-way valve 52 is in a gas-liquid two-phase state. The second drying device 62 can realize gas-liquid separation of the third cooling fluid. The second drying device 62 discharges the liquid-phase third cooling fluid. The third cooling fluid from the condenser 60 flows to the third heat exchanger 45 and the third chamber 83 of the first heat exchanger 14 respectively. The third cooling fluid is configured to perform heat exchange with the outside air in the third heat exchanger 45. The air absorbs the heat of the third cooling fluid in the third heat exchanger 45. The third cooling fluid is further configured to perform heat exchange with the second cooling fluid in the first heat exchanger 14. The second cooling fluid absorbs the heat of the third cooling fluid in the first heat exchanger 14. The second cooling fluid after absorbing heat flows back to the first water pump 31. The third cooling fluid discharged from the first heat exchanger 14 and the third cooling fluid discharged from the third heat exchanger 45 both flow to the second refrigerant three-way valve 49. Finally, the third cooling fluid after releasing heat flows back to the air conditioning compressor 41. The air conditioning compressor 41 continues its circulation operation, so that the third cooling fluid after heat exchange from the third chamber 83 can flow to the condenser 60 and the battery 48 respectively.

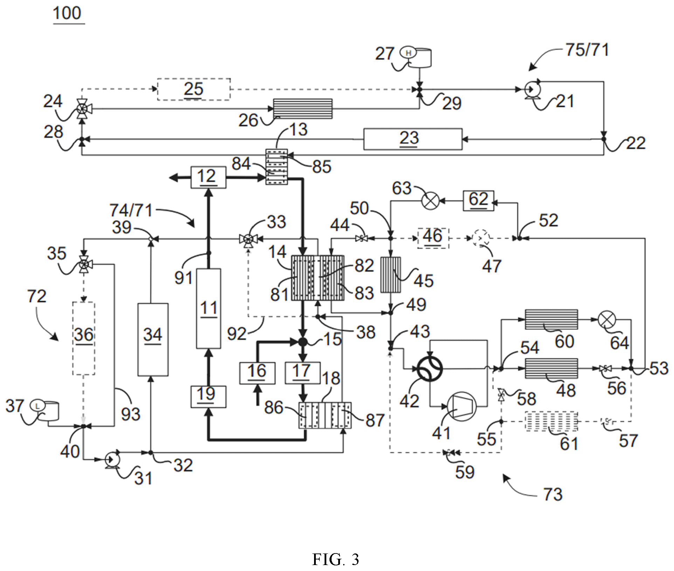

FIG. 3 illustrates the operating condition of the vehicle thermal management system 100 applicable to the hybrid mode in a low-temperature environment.

Under this operating condition, when the vehicle thermal management system 100 is in the second operating state, the engine system heat exchange circuit 71 and the electric drive system heat exchange circuit 72 are configured to perform heat exchange via the first heat exchanger 14, and the electric drive system heat exchange circuit 72 after the heat exchange is configured to perform heat exchange with the air conditioning heat pump heat exchange circuit 73 via the first heat exchanger 14. Both the motor 34 and the engine system heat exchange circuit 71 are in operation. Heat interaction occurs between the electric drive system heat exchange circuit 72 and the air conditioning heat pump heat exchange circuit 73, so that the waste heat of the motor 34 can be supplied to the air conditioning heat pump heat exchange circuit 73 to provide heat to the passenger compartment and the power battery 48. The water side of the low-temperature radiator 36 is not in operation.

The engine system heat exchange circuit 71 discharges the first cooling fluid, which flows through the second heat exchanger 13. The first cooling fluid is configured to perform heat exchange with the fourth cooling fluid in the second heat exchanger 13. The temperature of the first cooling fluid decreases for the first time, and the temperature of the fourth cooling fluid increases. The fourth cooling fluid from the second heat exchanger 13 can flow to the heating device 26. The heating device 26 absorbs the heat of the fourth cooling fluid and heats the outside air. The heated air can be delivered to the passenger compartment to increase the temperature of the passenger compartment.

The first cooling fluid after the first temperature decrease flows into the first chamber 81 of the first heat exchanger 14. The first cooling fluid in the first chamber 81 is configured to perform heat exchange with the second cooling fluid in the second chamber 82. The first cooling fluid undergoes a second temperature decrease in the first heat exchanger 14. The first cooling fluid after the second temperature decrease flows to the water-cooled intercooler 18. The first cooling fluid undergoes a third temperature decrease in the water-cooled intercooler 18. The first cooling fluid after the third temperature decrease flows back to the engine system heat exchange circuit 71.

The flow process of the second cooling fluid in the electric drive system heat exchange circuit 72 under this operating condition is similar to that of the second cooling fluid in FIG. 2, and the similarities will not be repeated here. The difference lies in that the second cooling fluid is configured to perform heat exchange in the water-cooled intercooler 18. The second cooling fluid from the water-cooled intercooler 18 is configured to perform heat exchange with the first cooling fluid in the first heat exchanger 14, and the second cooling fluid from the water-cooled intercooler 18 is configured to perform heat exchange with the third cooling fluid in the first heat exchanger 14. The first cooling fluid in the first chamber 81 is configured to perform heat exchange with the second cooling fluid in the second chamber 82. The second cooling fluid in the second chamber 82 is configured to perform heat exchange with the third cooling fluid in the third chamber 83.

In the water-cooled intercooler 18, the first cooling fluid from the first heat exchanger 14 is configured to perform heat exchange with the second cooling fluid of the electric drive system heat exchange circuit 72. The first cooling fluid undergoes a third temperature decrease in the water-cooled intercooler 18. The second cooling fluid undergoes a first temperature increase in the water-cooled intercooler 18. In the first heat exchanger 14, the first cooling fluid from the second heat exchanger 13 is configured to perform heat exchange with the second cooling fluid from the water-cooled intercooler 18. The first cooling fluid undergoes a second temperature decrease in the first heat exchanger 14, and the second cooling fluid undergoes a second temperature increase in the first heat exchanger 14.

The flow process of the third cooling fluid in the air conditioning heat pump heat exchange circuit 73 under this operating condition is similar to that of the third cooling fluid in FIG. 2, and the similarities will not be repeated here. The air conditioning compressor 41 discharges the third cooling fluid, and the refrigerant four-way valve 42 switches to the heating mode. The difference between the air conditioning heat pump heat exchange circuit 73 of the vehicle thermal management system 100 shown in FIG. 3 and that shown in FIG. 2 lies in that the third cooling fluid from the second drying device 62 flows into the first heat exchanger 14. The third cooling fluid is configured to perform heat exchange with the heat-exchanged second cooling fluid in the first heat exchanger 14.

Thus, the first heat exchanger 14 participates in heat interaction among the electric drive system heat exchange circuit 72, the engine system heat exchange circuit 71, and the air conditioning heat pump heat exchange circuit 73. The water-cooled intercooler 18 participates in cooling.

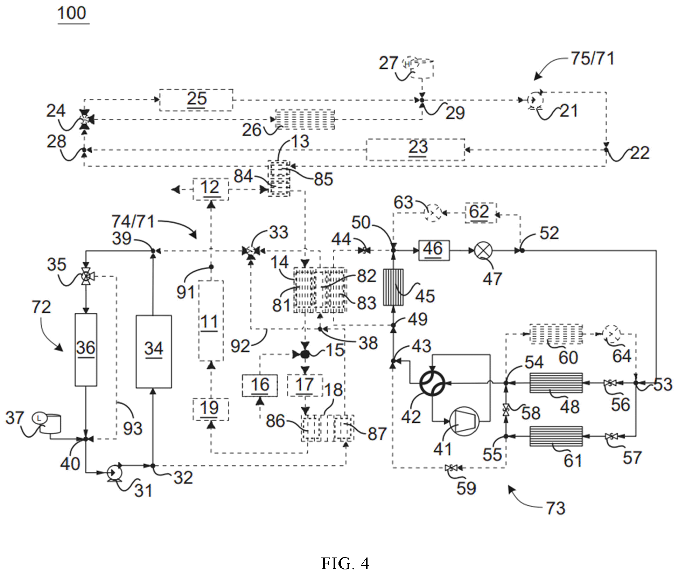

FIG. 4 illustrates the operating condition of the vehicle thermal management system 100 applicable to the pure electric mode in a high-temperature environment.

Under this operating condition, the motor 34 is in operation, the engine system heat exchange circuit 71 is not in operation, and the low-temperature radiator 36 is in operation. In the electric drive system heat exchange circuit 72, the motor 34 is cooled. No fluid flows through the first heat exchanger 14 and the water-cooled intercooler 18. The condenser 60 is not in operation. The first heat exchanger 14 is not in communication with the air conditioning heat pump heat exchange circuit 73.

The second water tank 37 discharges the second cooling fluid. The second cooling fluid flows through the first water pump 31 and the third water-side three-way valve 32. The second cooling fluid flowing out of the third water-side three-way valve 32 enters the motor 34. The second cooling fluid discharged from the motor 34 flows to the fifth water-side three-way valve 39. The second cooling fluid discharged from the fifth water-side three-way valve 39 flows to the low-temperature radiator 36 through the second electronic three-way valve 35. The low-temperature radiator 36 reduces the temperature of the second cooling fluid from the motor 34. The second cooling fluid flows back to the second four-way valve 40, and finally flows to the first water pump 31 through the second four-way valve 40.

The evaporator 61 is in operation, and the condenser 60 is not in operation. The evaporator 61 and the battery 48 are connected in parallel. The air conditioning compressor 41 discharges the third cooling fluid. The refrigerant four-way valve 42 switches to the refrigeration mode. The third cooling fluid flows to the first refrigerant three-way valve 43 through the refrigerant four-way valve 42. The third cooling fluid discharged from the first refrigerant three-way valve 43 flows to the third heat exchanger 45. The third cooling fluid is configured to perform heat exchange with the outside air in the third heat exchanger 45. The air releases heat in the third heat exchanger 45 to reduce its temperature, and the cooled air enters the passenger compartment to cool down the passenger compartment.

The third heat exchanger 45 is connected in series with the first drying device 46. The third cooling fluid discharged from the third heat exchanger 45 is in a gas-liquid two-phase state. The first drying device 46 can realize gas-liquid separation of the third cooling fluid. The first drying device 46 discharges the liquid-phase third cooling fluid.

The third heat exchanger 45 is located upstream of the evaporator 61 along the flow direction of the third cooling fluid. The third cooling fluid from the third heat exchanger 45 flows to the evaporator 61. The third cooling fluid in the evaporator 61 is configured to perform heat exchange with the outside air. The third cooling fluid absorbs heat, and the air releases heat to reduce the temperature of the air, so that the cooled air flows into the passenger compartment, thereby reducing the temperature in the passenger compartment.

The third heat exchanger 45 is located upstream of the battery 48 along the flow direction of the third cooling fluid. The third cooling fluid from the third heat exchanger 45 flows to the battery 48. The battery 48 is configured to perform heat exchange with the third cooling fluid. The third cooling fluid absorbs heat, and the battery 48 releases heat to reduce the temperature of the battery 48. The third cooling fluid discharged from the evaporator 61 and the battery 48 both flows back to the air conditioning compressor 41. The air conditioning compressor 41 continues its circulation operation, enabling the third cooling fluid from the evaporator 61 and the battery 48 to be recycled.

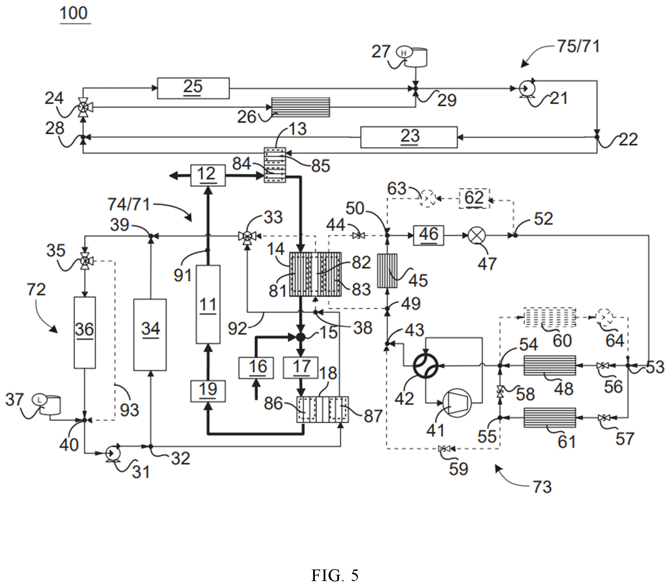

FIG. 5 illustrates the operating condition of the vehicle thermal management system 100 applicable to the hybrid mode in a high-temperature environment.

Under this operating condition, the motor 34 is in operation, the engine system heat exchange circuit 71 is in operation, the electric drive system heat exchange circuit 72 fulfills the cooling requirement, and the air conditioning heat pump heat exchange circuit 73 fulfills the refrigeration requirement. Intake and exhaust gas of the engine system heat exchange circuit 71 circulate. The first cooling fluid is cooled through the second heat exchanger 13. The first heat exchanger 14 only plays a connecting role but does not participate in heat exchange.

The flow process of the first cooling fluid under this operating condition is similar to that of the first cooling fluid in FIG. 3, and the similarities will not be repeated here. The flow process of the second cooling fluid under this operating condition is similar to that of the second cooling fluid in FIG. 4, and the similarities will not be repeated here. The flow process of the third cooling fluid under this operating condition is similar to that of the third cooling fluid in FIG. 4, and the similarities will not be repeated here.

The difference lies in that the high-temperature radiator 25 is in operation, and the heating device 26 is not in operation. The fourth cooling fluid is configured to perform heat exchange with the first cooling fluid in the second heat exchanger 13. The fourth cooling fluid absorbs the heat of the first cooling fluid in the second heat exchanger 13 to increase its temperature. The heated fourth cooling fluid enters the high-temperature radiator 25. The high-temperature radiator 25 cools the fourth cooling fluid and causes it to flow back to the second water tank 37. The heating device 26 only plays a water-side conduction role and does not supply heat to the passenger compartment.

The first cooling fluid is configured to perform heat exchange with the fourth cooling fluid in the second heat exchanger 13. The first cooling fluid releases heat in the second heat exchanger 13 to reduce its temperature. The cooled first cooling fluid flows to the first heat exchanger 14 and then flows to the water-cooled intercooler 18 through the first heat exchanger 14. The first heat exchanger 14 does not exert a heat exchange effect on the first cooling fluid. The first cooling fluid compressed and mixed by the turbocharger 17 is configured to perform heat exchange with the second cooling fluid in the water-cooled intercooler 18. The first cooling fluid releases heat in the water-cooled intercooler 18 to reduce its temperature again. The second cooling fluid absorbs heat in the water-cooled intercooler 18 to increase its temperature. The heated second cooling fluid directly enters the first electronic three-way valve 33 through the first bypass water path 92, and then flows to the low-temperature radiator 36. The heated second cooling fluid does not enter the first heat exchanger 14. The low-temperature radiator 36 reduces the temperature of the second cooling fluid, and the cooled second cooling fluid flows back to the first water pump 31.

The air conditioning compressor 41 discharges the third cooling fluid. The refrigerant four-way valve 42 switches to the refrigeration mode. The third heat exchanger 45 is located upstream of the evaporator 61 along the flow direction of the third cooling fluid. The third cooling fluid from the third heat exchanger 45 flows to the evaporator 61. The third cooling fluid in the evaporator 61 is configured to perform heat exchange with the outside air. The third cooling fluid absorbs heat, and the air releases heat to reduce the temperature of the air, so that the cooled air flows into the passenger compartment, thereby reducing the temperature in the passenger compartment.

The third heat exchanger 45 is located upstream of the battery 48 along the flow direction of the third cooling fluid. The third cooling fluid from the third heat exchanger 45 flows to the battery 48. The battery 48 is configured to perform heat exchange with the third cooling fluid. The third cooling fluid absorbs heat, and the battery 48 releases heat to reduce the temperature of the battery 48. The third cooling fluid discharged from the evaporator 61 and the battery 48 both flows back to the air conditioning compressor 41. The air conditioning compressor 41 continues its circulation operation, enabling the third cooling fluid from the evaporator 61 and the battery 48 to be recycled.

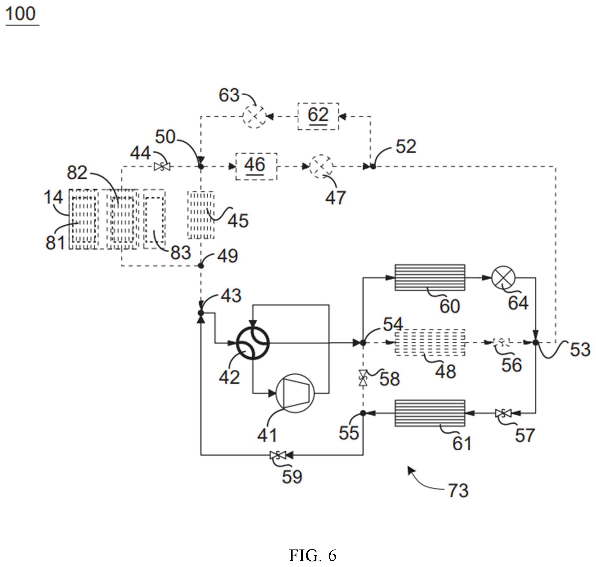

FIG. 6 illustrates the operating condition of the vehicle thermal management system 100 applicable to the passenger compartment dehumidification mode in a low-temperature environment.

Under this operating condition, the engine system heat exchange circuit 71 and the motor 34 may be in an operating state or a non-operating state, and the motor 34 may be in a warm-up state or a heat dissipation state.

The air conditioning compressor 41 discharges the third cooling fluid. The refrigerant four-way valve 42 switches to the dehumidification mode. No fluid flows through the third heat exchanger 45 and the first heat exchanger 14. The third cooling fluid discharged from the air conditioning compressor 41 first flows through the condenser 60 and then through the evaporator 61. The third cooling fluid discharged from the evaporator 61 flows back to the air conditioning compressor 41. The condenser 60 releases heat. The evaporator 61 absorbs heat for dehumidification. The first drying device 46 is not in communication with the evaporator 61. The second drying device 62 is not in communication with the condenser 60.

The EGR (Exhaust Gas Re-circulation) cooling flow path 71 of the vehicle thermal management system 100 of the present disclosure does not directly exchange heat with the air conditioning heat pump heat exchange circuit 73. In this way, the high temperature of the EGR exhaust gas is unlikely to cause overpressure of the refrigerant in the air conditioning heat pump heat exchange circuit 73.

The heat exchange sequence of the first heat exchanger 14 is: EGR flow path 71 (the EGR flow path is a bold line in the FIG. and is a gas pipeline) → motor cooling water path 72 → air conditioning refrigerant flow path 73. Thus, the heat from the EGR flow path 71 is first transferred to the motor cooling water path 72, and then this part of the heat together with the waste heat of the motor 34 can be used for the heating of the air conditioner. It is understandable that the high temperature of the EGR exhaust gas may cause overpressure of the air conditioning refrigerant, but this does not mean that the heat provided by the EGR is greater than the heat required by the refrigerant.

Furthermore, the flow directions of the EGR flow path 71 and the air conditioning refrigerant flow path 73 are the same, ensuring the heat exchange efficiency. The second cooling fluid in the motor cooling water path 72 can further perform countercurrent heat exchange with the first cooling fluid in the water-cooled intercooler 18. That is, the motor cooling water path 72 not only absorbs the waste heat of the motor 34 but also absorbs the intake air heat after turbocharging. The first heat exchanger 14 can further be used in the motor cooling water path 72 and the air conditioning heat pump heat exchange circuit 73 in the pure electric mode, thereby taking into account multiple modes.

Under low-temperature operating conditions, the EGR exhaust gas is configured to perform heat exchange through the first heat exchanger 14, so that the heat absorbed by the second cooling fluid in the first heat exchanger 14 can accelerate the warm-up of the motor 34 and improve the working efficiency of the motor 34. After the second cooling fluid is heated, the heat can be transferred to the third cooling fluid in the air conditioning heat pump heat exchange circuit 73 to provide the required heat for the passenger compartment and the battery 48.

In the air conditioning heat pump heat exchange circuit 73, a refrigerant four-way valve 42 is used to switch between refrigeration, heating, and dehumidification modes, which can reduce the use of electromagnetic on-off valves. The first heat exchanger 14 and the third heat exchanger 45 dissipate heat to the outside in the air conditioning refrigeration mode, where the first heat exchanger 14 is liquid-cooled and the third heat exchanger 45 is air-cooled. The first heat exchanger 14 and the third heat exchanger 45 absorb heat from the outside in the air conditioning heating mode. The first heat exchanger 14 absorbs the exhaust gas of the engine system heat exchange circuit 71 and the waste heat of the motor system. The third heat exchanger 45 absorbs the waste heat of the air (exhaust gas) from the engine system heat exchange circuit 71.

The first drying device 46 and the second drying device 62 are connected in parallel. The first drying device 46 is in circulation with the evaporator 61 in the refrigeration mode. The second drying device 62 is in circulation with the condenser 60 in the refrigeration mode. The flow directions of the third cooling fluid when flowing through the first drying device 46 and the second drying device 62 are opposite. The sufficient gas-liquid separation of each of the first drying device 46 and the second drying device 62 can improve the air conditioning refrigeration/heating efficiency (i.e., improve the COP coefficient of the air conditioner).

Under low-temperature operating conditions, the second heat exchanger 13 serves as an EGR primary cooler. The second heat exchanger 13 can not only reduce the temperature of the EGR exhaust gas but also accelerate the warm-up of the motor 34 and supply heat to the passenger compartment. The first heat exchanger 14 serves as an EGR secondary cooler, which can reduce the temperature of the exhaust gas entering the turbocharger 17 and increase the exhaust gas mass flow rate, thereby improving the EGR rate.

The first heat exchanger 14 can realize heat interaction among multiple systems (the engine system heat exchange circuit 71, the electric drive system heat exchange circuit 72, and the air conditioning heat pump heat exchange circuit 73). The first heat exchanger 14 can further realize a dehumidification function, reducing the condensate water generated at the cold end of the water-cooled intercooler 18, avoiding the blockage of the water-cooled intercooler 18 by the condensate water, and preventing acidic corrosion of the water-cooled intercooler 18.

The present disclosure further provides a vehicle, which includes the aforementioned vehicle thermal management system 100.

The vehicle according to the present disclosure includes the aforementioned vehicle thermal management system 100. The vehicle thermal management system 100 includes an engine system heat exchange circuit 71, an electric drive system heat exchange circuit 72, an air conditioning heat pump heat exchange circuit 73, and a first heat exchanger 14. The first heat exchanger 14 includes three chambers, namely a first chamber 81, a second chamber 82, and a third chamber 83. The first chamber 81 is in communication with the engine system heat exchange circuit 71. The second chamber 82 is in communication with the electric drive system heat exchange circuit 72. The third chamber 83 is in communication with the air conditioning heat pump heat exchange circuit 73. The second chamber 82 is located between the first chamber 81 and the third chamber 83. Thus, the engine system heat exchange circuit 71, the electric drive system heat exchange circuit 72, and the air conditioning heat pump heat exchange circuit 73 share the first heat exchanger. The first chamber 81 and the third chamber 83 are separated, and the heat from the first chamber 81 is first transferred to the second chamber 82, then to the third chamber 83 through the second chamber 82. The first chamber and the third chamber do not directly exchange heat, such that the heat discharged from the engine system heat exchange circuit 71 is first transferred to the electric drive system heat exchange circuit 72 and then to the air conditioning heat pump heat exchange circuit 73, avoiding overpressure caused by the direct heat exchange between the air conditioning heat pump heat exchange circuit 73 and the heat discharged from the engine system heat exchange circuit 71.

Unless otherwise defined, the technical and scientific terms used herein have the same meanings as commonly understood by those skilled in the technical field of the present disclosure. The terms used herein are only for the purpose of describing specific embodiments and are not intended to limit the present disclosure. Terms such as "part" and "component" used herein may refer to a single component or a combination of multiple components. Terms such as "mount" and "arrange" used herein may refer to a component being directly attached to another component or a component being attached to another component through an intermediate component. Features described in one embodiment herein may be applied to another embodiment alone or in combination with other features, unless the feature is inapplicable to the other embodiment or otherwise stated.

The present disclosure has been described through the above embodiments, but it will be understood that the above embodiments are only for the purpose of illustration and explanation, and are not intended to limit the present disclosure to the scope of the described embodiments. In addition, those skilled in the art can understand that the present disclosure is not limited to the above embodiments, and more variations and modifications can be made according to the teachings of the present disclosure, which all fall within the scope of protection claimed by the present disclosure. The protection scope of the present disclosure is defined by the appended claims and their equivalent scopes.

## Claims

1. A vehicle thermal management system (100), the vehicle thermal management system (100) comprising:
an engine system heat exchange circuit (71);
an electric drive system heat exchange circuit (72);
an air conditioning heat pump heat exchange circuit (73); and
a first heat exchanger (14), the first heat exchanger (14) comprising:
a first chamber (81), the first chamber (81) being in communication with the engine system heat exchange circuit (71);
a second chamber (82), the second chamber (82) being in communication with the electric drive system heat exchange circuit (72); and
a third chamber (83), the third chamber (83) being in communication with the air conditioning heat pump heat exchange circuit (73);
wherein the second chamber (82) is located between the first chamber (81) and the third chamber (83).

2. The vehicle thermal management system (100) according to claim 1, wherein the vehicle thermal management system (100) is configured such that flow directions of cooling fluids in adjacent chambers among the first chamber (81), the second chamber (82), and the third chamber (83) are opposite.

3. The vehicle thermal management system (100) according to claim 2, wherein inlets and outlets of the first chamber (81), the second chamber (82), and the third chamber (83) are alternately arranged in sequence on a same side, such that flow directions of cooling fluids in adjacent chambers are opposite.

4. The vehicle thermal management system (100) according to claim 3, wherein an inlet of the first chamber (81), an outlet of the second chamber (82), and an inlet of the third chamber (83) are located on a same side; and an outlet of the first chamber (81), an inlet of the second chamber (82), and an outlet of the third chamber (83) are located on a same side.

5. The vehicle thermal management system (100) according to any one of claims 1 to 4, wherein when the vehicle thermal management system (100) is in an operating state, temperature ranges of adjacent chambers among the first chamber (81), the second chamber (82), and the third chamber (83) are different, and the temperature ranges of the first chamber (81), the second chamber (82), and the third chamber (83) exhibit a stepwise relationship in sequence.

6. The vehicle thermal management system (100) according to claim 5, wherein a first temperature corresponds to the first chamber (81), a second temperature corresponds to the second chamber (82), and a third temperature corresponds to the third chamber (83);
a temperature range corresponding to the first temperature is 80 to 100°C, a temperature range corresponding to the second temperature is 40 to 65°C, and a temperature range corresponding to the third temperature is 10 to 35°C.

7. The vehicle thermal management system (100) according to any one of claims 1 to 6, wherein the engine system heat exchange circuit (71) comprises an engine cooling heat exchange circuit (75) and an engine intake and exhaust heat exchange circuit (74);
the vehicle thermal management system (100) further comprises a second heat exchanger (13), the second heat exchanger (13) comprises:
a fourth chamber (84), the fourth chamber (84) is in communication with the engine intake and exhaust heat exchange circuit (74); and
a fifth chamber (85), the fifth chamber (85) is in communication with the engine cooling heat exchange circuit (75);
wherein the first chamber (81) is further in communication with the engine intake and exhaust heat exchange circuit (74), and the vehicle thermal management system (100) is configured such that a cooling fluid in the engine intake and exhaust heat exchange circuit (74) first flows through the fourth chamber (84) and then through the first chamber (81) to achieve early cooling and condensation via the first heat exchanger and the second heat exchanger.

8. The vehicle thermal management system (100) according to claim 7, wherein the vehicle thermal management system (100) further comprises an exhaust port (91), the first heat exchanger (14), the second heat exchanger (13), and the exhaust port (91) are arranged to be inclined sequentially, such that condensed water formed by early cooling and condensation is discharged through the exhaust port (91).

9. The vehicle thermal management system (100) according to any one of claims 1 to 8, further comprising a water-cooled intercooler (18), wherein the water-cooled intercooler (18) comprises:
a sixth chamber (86), the sixth chamber (86), the engine system heat exchange circuit (71), and the first chamber (81) are in communication with one another; and
a seventh chamber (87), the seventh chamber (87), the electric drive system heat exchange circuit (72), and the second chamber (82) are in communication with one another;
wherein the vehicle thermal management system (100) is configured such that a cooling fluid in the engine system heat exchange circuit (71) first flows through the first chamber (81) and then through the sixth chamber (86) to reduce temperature via the first heat exchanger (14) and the water-cooled intercooler (18).

10. The vehicle thermal management system (100) according to claim 9, wherein the vehicle thermal management system (100) is configured such that flow directions of cooling fluids in the sixth chamber (86) and the seventh chamber (87) are opposite.

11. The vehicle thermal management system (100) according to claim 10, wherein an inlet of the sixth chamber (86) is located on a first side of the water-cooled intercooler (18), and an inlet of the seventh chamber (87) is located on a second side of the water-cooled intercooler (18);
an outlet of the sixth chamber (86) is located on the second side of the water-cooled intercooler (18), and an outlet of the seventh chamber (87) is located on the first side of the water-cooled intercooler (18).

12. The vehicle thermal management system (100) according to any one of claims 1 to 11, wherein the electric drive system heat exchange circuit (72) and the air conditioning heat pump heat exchange circuit (73) perform heat exchange through the second chamber (82) and the third chamber (83), and the air conditioning heat pump heat exchange circuit (73) is configured to use the heat from the heat exchange to provide heat for a passenger compartment.

13. The vehicle thermal management system (100) according to claim 12, wherein the air conditioning heat pump heat exchange circuit (73) is configured to use the heat from the heat exchange to provide heat for a battery (48).

14. The vehicle thermal management system (100) according to any one of claims 1 to 13, wherein the vehicle thermal management system (100) further comprises a third heat exchanger (45), the third heat exchanger (45) is in communication with the air conditioning heat pump heat exchange circuit (73), and the third heat exchanger (45) is configured to exchange heat with the outside.

15. The vehicle thermal management system (100) according to any one of claims 1 to 14, wherein when the vehicle thermal management system (100) is in a first operating state, the electric drive system heat exchange circuit (72) and the air conditioning heat pump heat exchange circuit (73) are configured to perform heat exchange via the first heat exchanger (14).

16. The vehicle thermal management system (100) according to any one of claims 1 to 15, wherein when the vehicle thermal management system (100) is in a second operating state, the engine system heat exchange circuit (71) and the electric drive system heat exchange circuit (72) are configured to perform heat exchange via the first heat exchanger (14), and the electric drive system heat exchange circuit (72) after the heat exchange is configured to perform heat exchange with the air conditioning heat pump heat exchange circuit (73) via the first heat exchanger (14).

17. A vehicle, comprising the vehicle thermal management system (100) according to any one of claims 1 to 16.
